# FASCICULE DE BREVET EUROPEEN

(11) **EP 2 862 726 B1**
(45) Date de publication et mention de la délivrance du brevet: **31.08.2016**
(21) Numéro de dépôt: 14188750.5
(22) Date de dépôt: 14.10.2014
(51) Int. Cl.: A63H 18/00, B60B 9/26, A63H 17/26, B60B 1/14, B60B 3/00, B60B 9/04, B60B 35/10

(54) **Jouet roulant à voie variable**
Rollendes Spielzeug mit veränderlicher Spurweite
Variable-track rolling toy

(30) Priorité: 18.10.2013 FR 1360149
(43) Date de publication de la demande: 22.04.2015
(73) Titulaire: Parrot Drones, 75010 Paris (FR)
(72) Inventeur: Barse, Thomas, Hagoya, Aichi 461-0001 (JP)
(74) Mandataire: Dupuis-Latour, Dominique

(56) Documents cités:
- WO-A2-2006/029416
- FR-A- 336 551
- FR-A- 798 537
- GB-A- 111 408
- JP-A- 2011 041 696

## Description

L'invention concerne un jouet roulant comportant au moins une paire de roues parallèles disposées de part et d'autre d'un corps du jouet.

Un tel type de jouet est par exemple divulgué par le JP 2011/41696 A (Barse), qui décrit un jouet télécommandé roulant et sauteur monté sur deux roues indépendantes mues chacune par un moteur qui leur est propre, ce qui permet au jouet d'avance, reculer, tourner, se mettre en position pour sauter, etc., par la seule action de ses deux roues.

L'invention n'est toutefois pas limitée à ce type de jouet, et s'applique aussi bien à d'autres configurations de jouet roulant, par exemple à des jouets comportant plusieurs paires de roues (tels qu'une voiture à quatre roues), ou encore à un jouet dont les roues sont liées à un arbre commun et/ou dont les roues peuvent être aussi bien motrices que libres.

Les FR 336 551 A, WO2006/029416 A2, GB 111 408 A et FR 798 537 A décrivent diverses configurations de roues, applicables à des jouets. Le document FR 336 551A est considéré comme l'état de la technique le plus proche.

Le dimensionnement du jouet et la configuration de ses roues doivent répondre à des impératifs très variés, et selon le cas l'utilisateur pourra rechercher un encombrement réduit (par exemple pour pouvoir jouer dans des espaces confinés ou circuler au milieu d'obstacles rapprochés) ou une stabilité élevée (par exemple pour des déplacements rapides sur un sol inégal, ou pour un meilleur contrôle du saut, dans le cas d'un jouet sauteur).

Ces contraintes de compacité et de stabilité dépendent grandement de la voie, c'est-à-dire de l'écartement mutuel des deux roues en direction transversale : une voie faible permettra de disposer d'un jouet compact mais au détriment de la stabilité, notamment si le centre de gravité du jouet est assez haut ; inversement, une voie large procurera une excellente stabilité, mais au détriment de l'encombrement global du jouet et de sa maniabilité.

Le but de l'invention est de s'affranchir de ce compromis, en proposant un jouet dont l'écartement transversal des roues puisse être modifié très simplement par l'utilisateur entre deux positions, correspondant respectivement à un encombrement minimal et à une stabilité maximale.

On verra en outre que la solution de l'invention peut être mise en oeuvre avec un minimum de moyens matériels, sans multiplication de pièces mécaniques donc avec un cout très faible et une simplicité extrême du point de vue de la technologie, ainsi qu'une très grande robustesse à l'emploi.

L'invention propose à cet effet un jouet roulant comprenant, de manière en elle-même connue par exemple d'après le FR 336 551 A précité, au moins une paire de roues parallèles disposées de part et d'autre d'un corps du jouet, ces roues définissant entre elles une voie en direction axiale. Chaque roue comprend un moyeu, une jante pourvue d'une bande de roulement, et une pluralité de rayons s'étendant depuis le moyeu jusqu'à une région intérieure de la jante. Les rayons sont élastiquement déformables et l'ensemble formé par le moyeu et les rayons est monté dans la jante sous contrainte de compression des rayons, de manière à produire par effet de flambement une flexion des rayons courbant ceux-ci et décalant axialement le plan du moyeu par rapport à celui de la jante

De façon caractéristique de l'invention, cet ensemble est apte à prendre deux positions différentes également stables selon le sens de flexion des rayons, avec une position déployée à voie élargie où le plan de la jante est situé en éloignement du plan du moyeu axialement par rapport au corps du jouet, et une position repliée à voie réduite où le plan de la jante est situé en rapprochement du plan du moyeu axialement par rapport au corps du jouet. La forme et l'élasticité du matériau des rayons sont choisies de manière à autoriser une inversion du sens de flexion des rayons, et corrélativement le passage de la position déployée à la position repliée ou *vice versa,* sous l'effet d'un effort mécanique extérieur appliqué en direction axiale sur la jante, respectivement dans un sens ou dans l'autre. Selon diverses caractéristiques subsidiaires avantageuses :
- le moyeu et les rayons sont réalisés sous forme d'une pièce de liaison monobloc unique distincte de la jante et apte à être montée sur celle-ci, notamment sous forme d'une pièce plate au repos avant solidarisation à la jante, et la dimension circonférentielle hors-tout de cette pièce de liaison est supérieure au diamètre de la région intérieure de la jante, de manière à forcer la flexion des rayons au montage de la pièce de liaison dans la jante ;
- chaque rayon forme une structure de type poutre encastrée-rotulée, comprenant une liaison rigide de la partie proximale du rayon au moyeu, et une liaison ponctuelle de la partie distale du rayon à la région intérieure de la jante, cette liaison présentant au moins un degré de liberté en pivotement autour d'un axe orienté tangentiellement par rapport à la jante ;
- il est prévu des moyens clipsables de liaison de la partie distale du rayon à la région intérieure de la jante, notamment des moyens comprenant au moins une pince déformable et une tige coopérante s'étendant suivant une corde de la périphérie intérieure de la jante, la pince déformable étant portée par l'extrémité radiale du rayon et la tige coopérante étant portée par la jante ou *vice versa ;*
- les rayons comprennent une région centrale aplatie, avec une dimension en largeur dans un plan radial inférieure à leur dimension en épaisseur en direction axiale. Cette région centrale aplatie peut présenter une dimension en largeur plus faible dans la partie médiane que dans les parties d'extrémité.

On va maintenant décrire un exemple de mise en oeuvre du dispositif de l'invention, en référence aux dessins annexés où les mêmes références désignent d'une figure à l'autre des éléments identiques ou fonctionnellement semblables.
Les Figures 1a et 1b sont des vues de face du jouet selon l'invention, montrant les deux positions respectives repliée et déployée des roues montées de part et d'autre du corps du jouet.
Les Figures 2a et 2b représentent isolément, en perspective, la roue du jouet de l'invention, respectivement en position déployée et repliée.
Les Figures 3a et 3b sont homologues des Figures 2a et 2b, en vue de côté.
Les Figures 4 et 5 représentent isolément, respectivement de face et de côté, un ensemble moyeu-rayons de la roue selon l'invention.
La Figure 6 est une vue éclatée complète de la roue de l'invention, illustrant la manière d'insérer l'ensemble moyeu-rayons des Figures 4 et 5 dans la jante de la roue, celle-ci étant ensuite munie de sa bande de roulement.

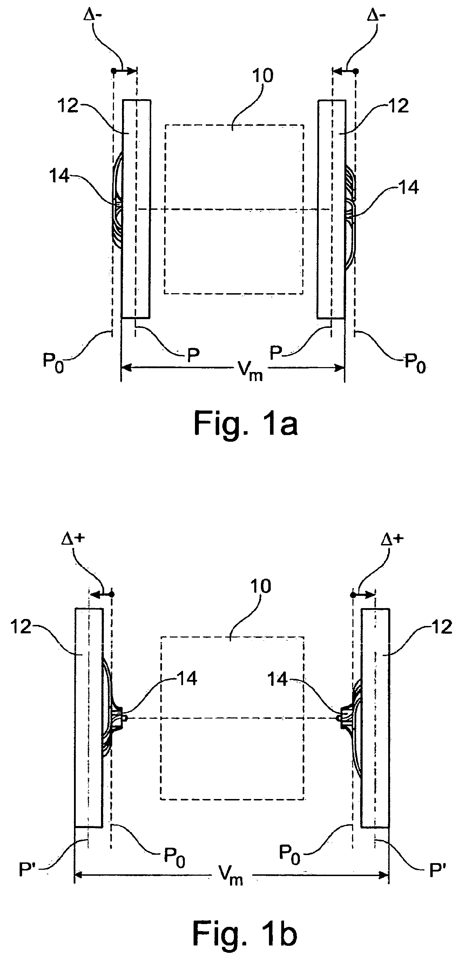

Sur les Figures 1a et 1b, la référence 10 désigne de façon générale et schématique le corps du jouet, qui est pourvu d'au moins une paire de roues latérales 12 avec chacune un moyeu central 14 relié au corps 10 par des moyens appropriés (non représentés) tels qu'un arbre relié à un moteur d'entrainement de la roue, un essieu commun relié ou non à un moteur, etc.

Les roues sont montées sur le corps 10 de manière que les moyeux 14 se situent dans un plan radial P₀ dont la position est fixe par rapport au corps 10, c'est-à-dire que les deux plans P₀ correspondant aux moyeux respectifs des deux roues présenteront un écartement mutuel fixe.

En revanche, les jantes des roues pourront être déplacées entre deux positions, représentées respectivement Figures 1 a et 1 b :
- dans une première position illustrée Figure 1a, ci-après "position repliée", les plans P respectifs des roues 12 se trouveront plus rapprochés du corps 10 du jouet que les plans P₀ des moyeux 14 (décalage Δ⁻ sur la figure) donnant au jouet une voie Vₘ minimale ;
- dans une seconde position illustrée Figure 1b, ci-après "position déployée", les roues se trouveront en revanche dans des plans radiaux P' plus éloignés du corps 10 du jouet que les plans P₀ des moyeux 14 (décalage Δ⁺ sur la figure), donnant ainsi au jouet une voie V_{M} maximale procurant une plus grande stabilité que dans la position repliée (mais au prix d'une moindre compacité).

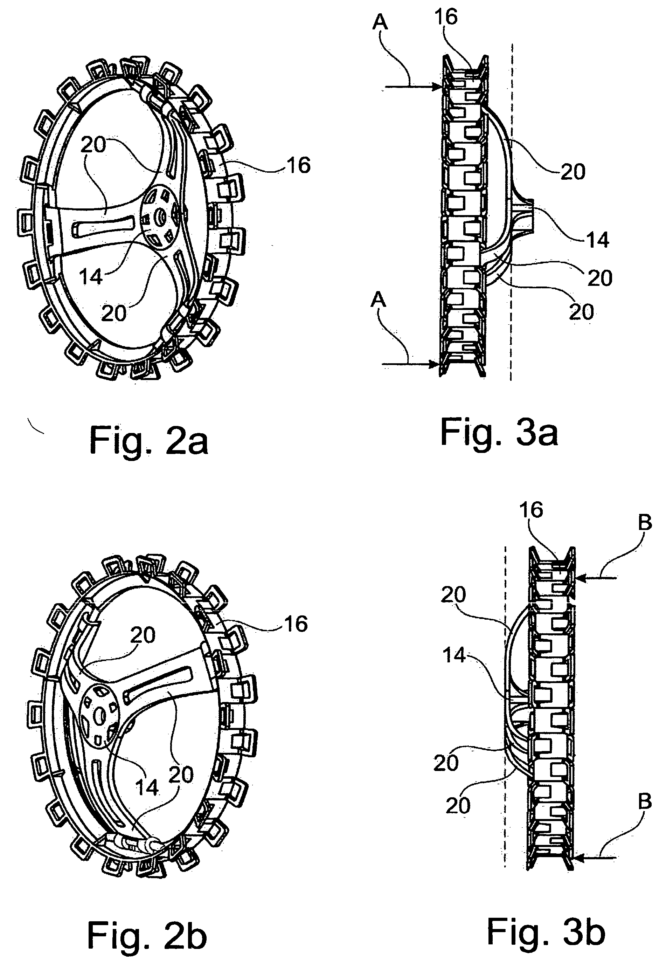

On va maintenant décrire en détail, en référence aux Figures 2 à 6, la structure de chacune des roues 12 équipant le jouet.

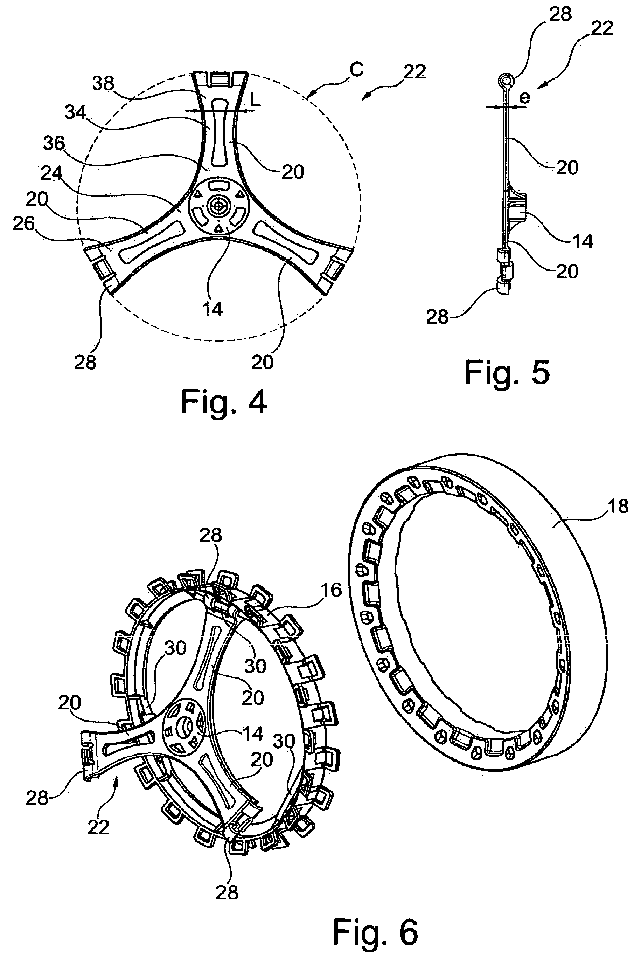

Ces roues sont réalisées autour d'un moyeu 14 à partir duquel s'étendent une pluralité de rayons 20 permettant de relier ce moyeu à une jante circulaire 16 recevant, comme illustré Figure 6, une bande de roulement 18 de type bandage plein ou pneumatique. Ces différents éléments sont réalisés dans des matières plastiques appropriées, par exemple en polypropylène pour le moyeu et les rayons 20, en ABS pour la jante 16 et en une mousse de polyoléfine basse densité pour la bande de roulement 18.

En ce qui concerne les rayons 20, ceux-ci sont par exemple au nombre de trois, tous identiques, et s'étendent radialement vers l'extérieur à partir du moyeu 14 jusqu'à une région périphérique intérieure de la jante 16, à laquelle ils sont reliés de la manière que l'on exposera plus bas en détail. Les Figures 4 et 5 illustrent plus précisément la structure du moyeu 14 et des rayons 20, qui sont avantageusement réalisés sous forme d'une pièce de liaison monobloc unique 22. Sur les Figures 4 et 5, cette pièce a été représentée isolément, telle qu'elle se présente au repos en l'absence de toute contrainte ou sollicitation extérieure, c'est-à-dire avant montage dans la jante 16 (ce montage étant effectué sous contrainte).

Dans cet état libre, la pièce 22 est de forme plate, les rayons 20 s'étendant de façon rectiligne, sans courbure (cf. Figure 5) depuis une partie proximale 24, où ils sont réunis à une partie de flasque du moyeu 14, jusqu'à une partie distale 26 où ils sont reliés à une région périphérique intérieure de la jante 16. En partie proximale 24, le rayon 20 est formé monobloc avec le moyeu 14 ce qui, du point de vue de la mécanique des structures, peut être considéré comme une liaison encastrée.

À l'extrémité distale 26 du rayon, la liaison à la jante est avantageusement une liaison articulée, présentant au moins un degré de liberté en pivotement. Ce degré de liberté est obtenu en conformant l'extrémité distale du rayon 26 en une pince 28 clipsable sur une tige correspondante 30 formée sur l'intérieur de la jante le long d'une corde (Figure 6).

Du point de vue de la mécanique des structures, cette liaison peut être définie comme une liaison rotulée de sorte que, pour décrire le comportement en flexion du rayon 20, celui-ci peut être assimilé à une poutre de type encastrée-rotulée.

De plus, cette liaison articulée permet d'éviter le voilage de la jante 16 sous l'effet des contraintes appliquées par la pièce de liaison 22 lorsque celle-ci sera couplée à la jante.

En effet, comme illustré Figure 4, la pièce de liaison monobloc présente une dimension circonférentielle hors tout C dont le diamètre est supérieur à celui de la périphérie intérieure de la jante 16. De ce fait, si au repos la pièce de liaison 22 est plate, au moment de son montage sur la jante 16 il sera nécessaire de la courber pour que les trois pinces 28 puissent venir s'engager dans les trois tiges 30. La jante 16 étant beaucoup plus rigide que les rayons, cette contrainte de flexion se répercutera essentiellement sur les trois rayons 20, qui prendront alors la forme illustrée Figures 2a à 3b du fait de l'effet de flambement résultant de la contrainte de compression appliquée à chaque rayon 20 entre sa région proximale 24 (encastrée) au moyeu et sa région distale (articulée) 26 couplée à la jante.

La structure encastrée-rotulée fait en sorte que le rayon présente à l'équilibre une courbure continue, avec possibilité de tourner la concavité soit d'un côté (Figures 2a et 3a) soit de l'autre (Figures 2b et 3b) par une simple action mécanique extérieure de l'utilisateur (flèches A ou B respectivement sur les Figures 3a et 3b) en appuyant sur la jante.

La roue peut être ainsi déformée entre deux positions fixes différentes, stables, du seul fait de l'élasticité en flexion des rayons 20 et de la possibilité de produire avec ceux-ci un effet de flambement dans un sens ou dans l'autre.

La flexibilité des rayons, qui conditionne cet effet, peut être accrue en donnant à ceux-ci une forme aplatie, avec une épaisseur e faible (et constante) très inférieure à la largeur L en direction transversale (Figures 4 et 5).

La flexibilité peut être également modifiée en prévoyant pour le rayon une partie centrale 34 amincie dans la dimension de la largeur L, par rapport aux parties d'extrémité 36, 38, qui seront plus larges à l'endroit de la liaison respectivement au moyeu et à la jante, là où peuvent s'exercer des contraintes plus importantes, notamment en cours d'utilisation du jouet pendant les périodes de roulage, de réaction à un saut ou à une chute, etc. De plus, cette forme particulière permet, outre son esthétique avantageuse, de réduire la masse de la roue.

## Revendications

1. Un jouet roulant comprenant au moins une paire de roues parallèles (12) disposées de part et d'autre d'un corps (10) du jouet, ces roues définissant entre elles une voie en direction axiale, chaque roue comprenant :
- un moyeu (14) ;
- une jante (16) pourvue d'une bande de roulement (18) ; et
- une pluralité de rayons (20) s'étendant depuis le moyeu jusqu'à une région intérieure de la jante,
- les rayons sont élastiquement déformables ;
- l'ensemble formé par le moyeu et les rayons est monté dans la jante sous contrainte de compression des rayons, de manière à produire par effet de flambement une flexion des rayons courbant ceux-ci et décalant axialement le plan du moyeu par rapport à celui de la jante.
**caractérisé en ce que** :
- l'ensemble formé par le moyeu et les rayons est apte à prendre deux positions différentes également stables selon le sens de flexion des rayons, avec :
• une position déployée, à voie élargie (V_{M}), où le plan de la jante (P') est situé en éloignement (Δ⁺) du plan du moyeu (P₀) axialement par rapport au corps du jouet, et
• une position repliée, à voie réduite (Vₘ), où le plan de la jante (P) est situé en rapprochement (Δ⁻) du plan du moyeu (P₀) axialement par rapport au corps du jouet ; et
- la forme et l'élasticité du matériau des rayons sont choisies de manière à autoriser une inversion du sens de flexion des rayons, et corrélativement le passage de la position déployée à la position repliée ou *vice versa,* sous l'effet d'un effort mécanique extérieur appliqué en direction axiale sur la jante, respectivement dans un sens (A) ou dans l'autre (B).

2. Le jouet roulant de la revendication 1, dans lequel le moyeu (14) et les rayons (20) sont réalisés sous forme d'une pièce de liaison monobloc unique (22) distincte de la jante et apte à être montée sur celle-ci.

3. Le jouet roulant de la revendication 2, dans lequel la pièce de liaison (22) est une pièce plate au repos avant solidarisation à la jante, et la dimension circonférentielle hors-tout (C) de cette pièce de liaison est supérieure au diamètre de la région intérieure de la jante, de manière à forcer la flexion des rayons au montage de la pièce de liaison dans la jante.

4. Le jouet roulant de la revendication 1, dans lequel chaque rayon forme une structure de type poutre encastrée-rotulée, comprenant :
- une liaison rigide de la partie proximale (24) du rayon au moyeu, et
- une liaison ponctuelle de la partie distale (26) du rayon à la région intérieure de la jante, cette liaison présentant au moins un degré de liberté en pivotement autour d'un axe orienté tangentiellement par rapport à la jante.

5. Le jouet roulant de la revendication 1, comprenant des moyens clipsables (28, 30) de liaison de la partie distale du rayon à la région intérieure de la jante.

6. Le jouet roulant de la revendication 5, dans lequel les moyens clipsables de liaison comprennent au moins une pince déformable (28) et une tige coopérante (30) s'étendant suivant une corde de la périphérie intérieure de la jante, la pince déformable étant portée par l'extrémité radiale du rayon et la tige coopérante étant portée par la jante ou *vice versa.*

7. Le jouet roulant de la revendication 1, dans lequel les rayons comprennent une région centrale aplatie, avec une dimension en largeur (L) dans un plan radial inférieure à leur dimension en épaisseur (e) en direction axiale.

8. Le jouet roulant de la revendication 7, dans lequel la dimension en largeur (L) de la région centrale aplatie est plus faible dans la partie médiane (34) que dans les parties d'extrémité (36, 38) de celle-ci.

## Patentansprüche

1. Rollendes Spielzeug, das mindestens ein Paar paralleler Räder (12) enthält, die zu beiden Seiten eines Körpers (10) des Spielzeugs angeordnet sind, wobei diese Räder zwischen sich eine Spurweite in axialer Richtung definieren, wobei jedes Rad enthält:
- eine Nabe (14);
- eine mit einem Laufstreifen (18) versehene Felge (16); und
- eine Vielzahl von Speichen (20), die sich von der Nabe bis zu einem Innenbereich der Felge erstrecken,
- die Speichen sind elastisch verformbar;
- die von der Nabe und den Speichen geformte Einheit ist unter Druckbeanspruchung der Speichen in die Felge montiert, um durch Knickwirkung ein Biegen der Speichen zu erzeugen, indem diese gekrümmt werden und die Ebene der Nabe bezüglich derjenigen der Felge axial verschoben wird,
**dadurch gekennzeichnet, dass**:
- die von der Nabe und den Speichen geformte Einheit zwei gleich stabile unterschiedliche Stellungen in Biegerichtung der Speichen einnehmen kann, mit:
. einer ausgefahrenen Stellung mit vergrößerter Spurweite (V_{M}), in der die Ebene der Felge (P') sich axial bezüglich des Körpers des Spielzeugs in Entfernung (Δ⁺) zur Ebene der Nabe (P₀) befindet, und
. einer eingeklappten Stellung mit verringerter Spurweite (Vₘ), in der die Ebene der Felge (P) sich axial bezüglich des Körpers des Spielzeugs in Annäherung (Δ⁻) zur Ebene der Nabe (P₀) befindet, und
- die Form und die Elastizität des Materials der Speichen so gewählt werden, dass eine Umkehr der Biegerichtung der Speichen und korrelativ der Übergang von der ausgefahrenen Stellung in die eingeklappte Stellung oder umgekehrt unter der Wirkung einer in axialer Richtung in der einen (A) bzw. der anderen Richtung (B) auf die Felge ausgeübten äußeren mechanischen Kraft erlaubt wird.

2. Rollendes Spielzeug nach Anspruch 1, wobei die Nabe (14) und die Speichen (20) in Form eines einzigen einstückigen Verbindungsbauteils (22) hergestellt werden, das sich von der Felge unterscheidet und auf diese montiert werden kann.

3. Rollendes Spielzeug nach Anspruch 2, wobei das Verbindungsbauteil (22) ein in Ruhestellung vor der festen Verbindung mit der Felge flaches Bauteil ist, und die Gesamtumfangsabmessung (C) dieses Verbindungsbauteils größer ist als der Durchmesser des Innenbereichs der Felge, um die Biegung der Speichen bei der Montage des Verbindungsbauteils in die Felge zu erzwingen.

4. Rollendes Spielzeug nach Anspruch 1, wobei jede Speiche eine Struktur von der Art eingepasstschwenkgelagerter Balken formt, die enthält:
- eine starre Verbindung des proximalen Teils (24) der Speiche mit der Nabe, und
- eine punktförmige Verbindung des distalen Teils (26) der Speiche mit dem Innenbereich der Felge, wobei diese Verbindung mindestens einen Freiheitsgrad beim Schwenken um eine Achse aufweist, die tangential bezüglich der Felge ausgerichtet ist.

5. Rollendes Spielzeug nach Anspruch 1, das einklinkbare Einrichtungen (28, 30) zur Verbindung des distalen Teils der Speiche mit dem Innenbereich der Felge enthält.

6. Rollendes Spielzeug nach Anspruch 5, wobei die einklinkbaren Verbindungseinrichtungen mindestens eine verformbare Klemme (28) und eine kooperierende Stange (30) enthalten, die sich gemäß einer Kreissehne des Innenumfangs der Felge erstrecken, wobei die verformbare Klemme vom radialen Ende der Speiche getragen wird, und die kooperierende Stange von der Felge getragen wird, oder umgekehrt.

7. Rollendes Spielzeug nach Anspruch 1, wobei die Speichen einen abgeflachten Mittelbereich mit einer Breitenabmessung (L) in einer radialen Ebene geringer als ihre Dickenabmessung (e) in axialer Richtung enthalten.

8. Rollendes Spielzeug nach Anspruch 7, wobei die Breitenabmessung (L) des abgeflachten Mittelbereichs im medianen Teil (34) kleiner ist als in dessen Endteilen (36, 38).

## Claims

1. A rolling toy comprising at least one pair of parallel wheels (12) arranged on either side of a body (10) of the toy, these wheels defining between each other a track in the axial direction, each wheel comprising:
- a hub (14);
- a rim (16) provided with a tread (18); and
- a plurality of spokes (20) extending from the hub to an inner region of the rim,
- the spokes are elastically deformable;
- the unit formed by the hub and the spokes is mounted in the rim, with the spokes under compressive stress, so as to produce by buckling effect a flexion of the spokes bending these latter and axially offsetting the plane of the hub with respect to that of the rim, **characterized in that**:
- the unit formed by the hub and the spokes is adapted to take two different positions also stable according to the direction of flexion of the spokes, with:
. an extended position, with an enlarged track (V_{M}), in which the rim plane (P') is located at a greater distance (Δ⁺) from the hub plane (Po), axially with respect to the toy body, and
. a retracted position, with a reduced track (Vₘ), in which the rim plane (P) is located at a smaller distance (Δ⁻) from the hub plane (Po), axially with respect to the toy body; and
- the shape and elasticity of the spoke material are chosen so as to allow an inversion of the direction of flexion of the spokes, and correlatively the passage from the extended position to the retracted position, or *vice versa,* under the effect of an external mechanical effort applied axially to the rim, respectively in one direction A) or in the other (B).

2. The rolling toy of claim 1, wherein the hub (14) and the spokes (20) are made as a single one-piece link part (22) distinct from the rim and adapted to be mounted on the latter.

3. The rolling toy of claim 2, wherein the link part (22) is a flat part at rest before fastening to the rim, and the overall circumferential size (C) of this link part is higher than the diameter of the inner region of the rim, so as to force the flexion of the spokes at the time of mounting the link part into the rim.

4. The rolling toy of claim 1, wherein each spoke forms a structure of the embedded-knuckle beam type, comprising:
- a rigid link of the proximal part (24) of the spoke to the hub, and
- a punctual link of the distal part (26) of the spoke to the inner region of the rim, this link having at least one pivoting degree of freedom about an axis oriented tangentially with respect to the rim.

5. The rolling toy of claim 1, comprising clipsable means (28, 30) for linking the distal part of the spoke to the inner region of the rim.

6. The rolling toy of claim 5, wherein the clipsable linking means comprise at least one deformable clamp (28) and a cooperating rod (30) extending along a chord of the inner periphery of the rim, the deformable clamp being carried by the radial end of the spoke and the cooperating rod being carried by the rim, or *vice versa.*

7. The rolling toy of claim 1, wherein the spokes comprise a flattened central region, with a width dimension (L) in a radial plane lower than their thickness dimension (e) in the axial direction.

8. The rolling toy of claim 7, wherein the width dimension (L) of the flattened central region is lower in the median part (34) than in its end parts (36, 38).
